# EUROPÄISCHE PATENTSCHRIFT

(11) **EP 0 558 920 B1**
(45) Veröffentlichungstag und Bekanntmachung des Hinweises auf die Patenterteilung: **14.05.1997**
(21) Anmeldenummer: 93101269.4
(22) Anmeldetag: 28.01.1993
(51) Int. Cl.: A23G 1/26, A23G 7/00, B65G 23/00, B65G 21/00, B65G 47/31

(54) **Kettentransport**
Chain conveyor
Transporteur à chaîne

(30) Priorität: 01.02.1992 DE 4202897
(43) Veröffentlichungstag der Anmeldung: 08.09.1993
(73) Patentinhaber: WINKLER & DÜNNEBIER MASCHINENFABRIK UND EISENGIESSEREI KG, D-56564 Neuwied (DE)
(72) Erfinder: Rüegg, Hanno, CH-8280 Kreuzlingen (CH); Puderbach, Gerhard, W-5450 Neuwied 1 (DE)

(56) Entgegenhaltungen:
- EP-A- 0 345 585
- EP-A- 0 509 624
- US-A- 4 231 470

## Beschreibung

Die Erfindung betrifft einen Kettentransport mit einer, einen endlosen Kreislauf bildenden Transportkette, insbesondere für Schokoladengießformen, die innerhalb einer Anlage zur Herstellung von Schokoladenartikeln von Arbeitsstation zu Arbeitsstation transportiert werden, wobei zumindest ein Teilabschnitt der Transportkette kontinuierlich läuft, während zumindest ein anderer Teilabschnitt taktweise in seiner Geschwindigkeit verändert wird.

Grundsätzlich sind bei der Herstellung von Schokoladeartikeln zwei Arten von Anlagen gebräuchlich, die sich in ihren Kettentransporten wesentlich voneinander unterscheiden:

In der sogenannten Hohlkörperanlage arbeitet der Kettentransport taktweise. Die Schokoladengießformen werden in einer Ebene durch die gesamte Anlage von Arbeitsstation zu Arbeitsstation geschoben. Während der Einwirkungszeit der Arbeitsstationen auf die Gießformen ist der Kettentransport stillgesetzt.

Vorteilhaft an diesen Anlagen ist das genaue Positionieren der Formen in den Arbeitsstationen. Nachteilig ist der große Raumbedarf und die geringe Leistung. Derartige Anlagen werden deshalb für schwierig herzustellende Produkte, wie gefüllte Tafeln, flüssig gefüllte Artikel oder dgl., eingesetzt.

Im Gegensatz hierzu steht die sogenannte Kettenanlage. Sie weist eine oder mehrere kontinuierlich bewegte Transportketten auf, die die Anlage in mehreren Ebenen durchlaufen.

Vorteilhaft an dieser Anlagenart ist die kompakte Bauweise und die hohe Arbeitsgeschwindigkeit. Als Nachteil muß dafür die relativ ungenaue Positionierung der Gießformen in den Arbeitsstationen in Kauf genommen werden. Diese Anlagen finden daher vorzugsweise Anwendung bei der Herstellung von Massenartikeln, auch mit Zutaten, wie z.B. ganzen Haselnüssen, da hierbei, der großen Öffnungen in den Gießformen wegen, keine hohen Ansprüche an die Positionsgenauigkeit gestellt werden.

Beide Anlagearten lassen sich im übrigen mit stillstehenden oder hin- und herbewegten Gießköpfen ausrüsten. Je nachdem, ob es dabei zu einer Relativbewegung zwischen Gießform und Gießkopf kommt oder nicht, entsteht ein sogenannter Band- oder Punktguß. Es wurde bereits versucht, die Vorteile beider Anlagearten miteinander zu verbinden.

So wurden z.B. Anlagen gebaut, deren Kettentransport in eine Vielzahl von Einzeltransporten aufgeteilt war, wobei im Bereich der Kühleinrichtungen kontinuierlich laufende, im Bereich der Arbeitsstationen taktweise bewegte Förderketten Verwendung fanden.

Diese Lösung hat sich aber aufgrund der aufwendigen und störanfälligen Formkastenübergaben und der vielen unproduktiven Kettenbahnen nicht bewährt.

Bei einer anderen Lösung, die von einem Kettentransport mit einer endlosen Förderkette ausgeht, wird ein partieller Stillstand der Förderkette im Bereich der Arbeitsstationen angestrebt, während diese auf die Gießformen einwirken, wobei gleichzeitig andere Teile der Förderkette, etwa im Bereich der Kühlstrecken, kontinuierlich verlaufen.

Dazu ist die Auflage des Kettentransportes unterhalb der Arbeitsstation als verschiebbarer Schlitten ausgebildet, um den die Förderkette mittels am Maschinengestell und an den beiden Enden des Schlittens angeordnete Umlenkrollen herumgeführt wird. Durch Verschieben des Schlittens mit halber Kettengeschwindigkeit entgegen der Kettentransportrichtung wird die am Einlauf des Schlittens zugeführte Kettenlänge aufgenommen und andererseits die im Auslauf gespeicherte Kette abgegeben. Dadurch kommt es zu einem räumlichen Stillstand der Förderkette und damit der Gießformen auf dem Schlitten, während die restliche im Kreislauf befindliche Förderkette wie gewünscht kontinuierlich weiterläuft. Nach Umkehrung der Verschieberichtung wird die auf dem Schlitten befindliche Kette mit doppelter Geschwindigkeit abgeführt.

Nachteilig an dieser Lösung ist es, daß der angestrebte partielle Stillstand des Kettentransportes nur indirekt erreicht wird. Er ist das Resultat aus Kettengeschwindigkeit minus doppelter Gegenlaufgeschwindigkeit des Schlittens. Jede Veränderung der einen oder anderen Bewegung hat eine Verschiebung des stillstehenden Kettenabschnittes zur Folge. Dies wiegt besonders schwer, da ein direkter Antrieb des stillstehenden Kettenabschnittes nicht möglich ist, weil die ziehende Kettenumlenkung mit dem Schlitten hin- und hergleitet. Somit ist der Angriffspunkt des Antriebes weit vom Gießpunkt entfernt, was große Antriebsschwankungen verursacht, zu denen die Schwankungen des Schlittenantriebes noch hinzukommen. Die Bedienung dieser Einrichtung gestaltet sich schwierig, insbesondere dann, wenn bei der Herstellung von Bandguß eine genaue Relativbewegung zwischen stillstehendem Gießkopf und den darunter hindurchgeführten Gießformen einzuhalten ist.

Aus der EP-A-0 345 585 ist eine Fördereinrichtung mit mehreren, separat angetriebenen Förderbändern bekannt, die Süßwaren, die in Gruppen aus einer Fertigungseinrichtung austreten, unter Veränderung des Gruppen- und/oder des Reihenabstandes einer weiterverarbeitenden Einrichtung zuführen. Zu diesem Zweck weist die Fördereinrichtung u.a. zwei Bänder auf, deren einander zugekehrten Umlenkstellen auf einem hin- und her beweglichen Schlitten angeordnet sind und die damit eine sogenannte wandernde Übergabe bilden. Auf dem Schlitten ist zwischen den beiden Umlenkstellen noch ein Hilfsförderband vorgesehen, das einen eigenen Antrieb aufweist, der gemäß der Erfindung in Abhängigkeit von der Bewegungsrichtung des Schlittens, auf zwei Geschwindigkeiten umschaltbar ist. Wenn auch nicht in der Erfindung vorgesehen, so ist doch durch entsprechende Abstimmung der Schlittenbewegung auf die Umfangsgeschwindigkeit des Hilfsförderers ein kurzzeitiger räumlicher Stillstand des Hilfsförderers erreichbar. Allerdings ergibt sich dieser Stillstand durch die Überlagerung zweier Bewegungen. Diese Lösung weist somit die gleichen Nachteile wie der zuvor genannte Stand der Technik auf.

Aus der EP-A-0 509 624 ist eine Einrichtung zur Herstellung von Eis am Stiel bekannt. Die Eisportionen werden von einem endlosen, kontinuierlich umlaufenden Förderband durch einen Kühlschrank hindurchgeführt. An dessen Ausgang werden sie einzeln nacheinander von einem Zwischenförderer übernommen und in Querreihen auf ein quer verlaufendes Förderband abgelegt, das sie schließlich einer Verpackungseinrichtung zuführt. Der erwähnte Zwischenförderer verläuft in seinem Eingangsbereich kontinuierlich, in seinem Abgabebereich jedoch diskontinuierlich. Erreicht wird dies, indem der Kettenantrieb des Zwischenförderers über einen querlaufenden, mit Umlenkrollen versehenen Schlitten geführt wird. Steht dieser Schlitten still, ist die Kettengeschwindigkeit überall gleich, wird dieser Schlitten jedoch verschoben, so stellt sich auf der nicht angetriebenen Seite der Kette eine Geschwindigkeit ein, die sich zusammensetzt aus der Antriebsgeschwindigkeit der Kette plus oder minus der doppelten Verschiebegeschwindigkeit des Schlittens, d.h. es ist ein kurzzeitiger, partieller Stillstand des Zwischenförderers möglich. Dieser Stillstand ist jedoch, wie bereits im zuvor geschilderten Stand der Technik, das Ergebnis der Überlagerung von Bewegungen, es gelten somit auch hier die bereits geschilderten Nachteile.

Aufgabe der Erfindung ist es daher, einen Kettentransport derart auszubilden, daß bei Verwendung einer endlosen Transportkette Teilabschnitte dieser Transportkette kontinuierlich laufen, während andere Teilabschnitte gleichzeitig taktweise in ihrer Geschwindigkeit verändert werden, wobei, bei einfacher Bedienung, hohe Positionierungsgenauigkeit der mitgeführten Gießformen erreicht werden soll.
Gelöst wird diese Aufgabe der Erfindung dadurch, daß jeder taktweise in seiner Geschwindigkeit veränderbarer Teilabschnitt der Transportkette durch zwei in Fixpunkten gelagerten Kettenumlenkungen begrenzt ist, wobei die stromabwärts angeordnete Kettenumlenkung als ziehendes Antriebsritzel ausgebildet ist, das mit zu- und abschaltbaren Antriebsmitteln in Verbindung steht und daß zur Aufnahme bzw. Abgabe von überschüssiger bzw. fehlender Kettenlänge an Ein- und Auslauf dieser Teilabschnitte frei hin- und hergleitende Kettenumlenkrollen angeordnet sind.

Weitere Merkmale der Erfindung gehen aus den Unteransprüchen sowie aus der Beschreibung einiger bevorzugter Ausführungsformen hervor.

Die Vorteile des erfindungsgemäßen Kettentransportes liegen in der Art des Antriebes der taktweise in ihrer Geschwindigkeit veränderbaren Kettenabschnitten begründet. Im Gegensatz zu der auf den ersten Blick ähnlich erscheinenden Lösung nach dem Stand der Technik, den Stillstand durch zwei gegenläufige Bewegungen herzuleiten, wird hier jede Bewegung und auch der Stillstand direkt erzeugt, indem die stromabwärts gelegene Kettenumlenkung des betreffenden Kettenabschnitts als Antriebsritzel ausgebildet ist. Dadurch ist die Geschwindigkeit der Förderkette im Bereich der Arbeitsstation exakt gleich der Antriebsgeschwindigkeit dieser Kettenumlenkung und deren Stillsetzen führt somit zum Stillstand der Gießformen in der betreffenden Arbeitsstation. Da Gießform und angetriebene Umlenkung räumlich sehr dicht beieinanderliegen, hat selbst Kettenlängung praktisch keinen Einfluß auf die Genauigkeit der Positionierung. Die für Bandguß erforderliche Relativbewegung zwischen Gießform und Gießkopf kann in einfacher und für das Bedienungspersonal überschaubarer Weise in der Stillstandsphase z.B. über ein Überlagerungsgetriebe eingeleitet werden.

Im folgenden sollen einige bevorzugte Ausführungsformen des erfindungsgemäßen Kettentransportes unter Bezugnahme auf die schematische Zeichnung näher erläutert werden:

In der Zeichnung zeigen:
- Fig. 1: Eine Schokolade-Gießanlage mit mehreren Arbeitsstationen, von denen einige kontinuierlich und andere taktweise von der Förderkette durchlaufen werden.
- Fig. 2: Eine Arbeitsstation mit den Einrichtungen zum taktweisen Stillsetzen des Kettentransportes
- Fig. 3: Die Einrichtung nach Fig. 2 zu Beginn einer Stillstandsphase
- Fig. 4: Die Einrichtung nach Fig. 2 gegen Ende einer Stillstandsphase
- Fig. 5: Die Einrichtung nach Fig. 2 während des Nachlaufvorganges
- Fig. 6: Einrichtung nach Fig. 2 mit zusätzlichem Überlagerungsgetriebe und Schrittmotor
- Fig. 7: Einrichtung ähnlich Fig. 6 mit einem Servomotor anstelle eines Schrittgetriebes
- Fig. 8: Erzeugung des Stillstandes, der Zusatzbewegung und des Nachlaufs mittels eines elektronisch gesteuerten Servomotors

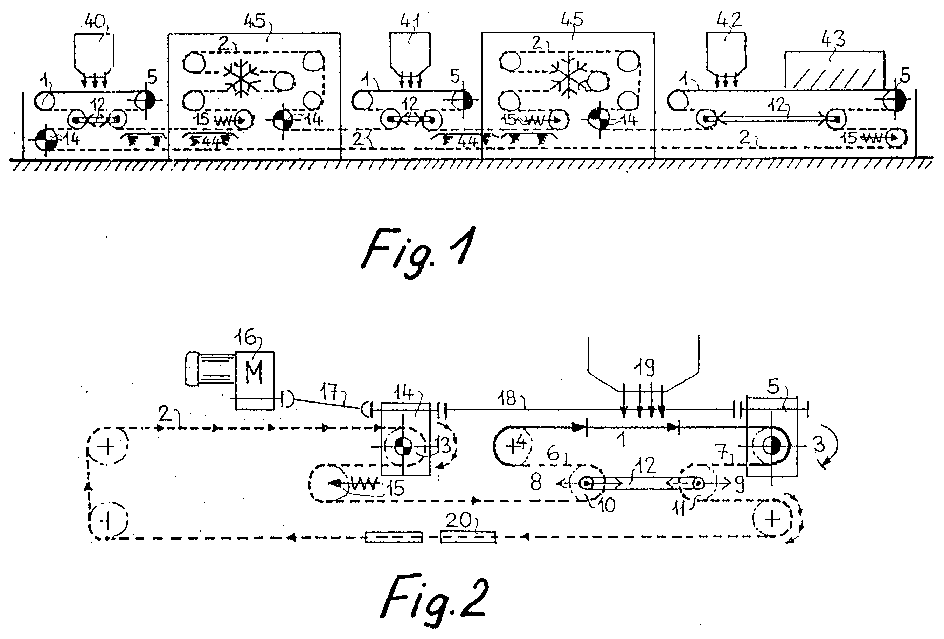

Schokoladegießanlagen bestehen aus einer Vielzahl von hintereinander angeordneten Stationen, denen die Gießformen 20 nacheinander mittels eines Kettentransportes zugeführt werden. In Fig. 1 ist ein Ausschnitt aus einer derartigen Schokoladegießanlage schematisch dargestellt. Gezeigt sind drei Gießstationen 40,41 und 42, eine Abspachtelstation 43, zwei den Gießstationen nachgeschaltete Rüttelbahnen 44 und zwei Kühleinrichtungen 45. Der Kettentransport besteht aus einer endlosen Förderkette, die im Bereich der Gießstationen 40,41 und 42 und der Abspachtelstation 43 taktweise, in allen anderen Bereichen, wie in den Rüttelbahnen 44 und den Kühleinrichtungen 45 hingegen kontinuierlich bewegt wird. Zur Verdeutlichung sind in der Zeichnung die taktweise bewegten Förderkettenabschnitte 1 ausgezogen, die kontinuierlich bewegten Förderkettenabschnitte 2 gestrichelt dargestellt. Der Hauptantrieb der Förderkette erfolgt über einige über die Länge der Anlage verteilte, kontinuierlich laufende Schneckengetriebe 14. Wie es dennoch möglich ist, die Förderkette in bestimmten Bereichen taktweise zu bewegen, soll anhand von Fig. 2 näher erläutert werden. Im Mittelpunkt der Betrachtung steht hier eine Gießstation 19, unter der Gießformen 20 taktweise hindurchgeführt werden. Taktweise bedeutet hier, daß die Gießformen 20 unter die Gießstation 19 geleitet und dort während des Gießvorganges stillgesetzt werden. Nach ihrer Befüllung werden sie wieder beschleunigt und an eine hier nicht dargestellte Station, etwa an die aus Fig. 1 bekannte Rüttel- oder Kühleinrichtungen 44 oder 45, weitergeleitet. Dazu ist der unter der Gießstation 19 verlaufende, taktweise bewegte Kettenabschnitt 1 durch zwei auf starren Achsen gelagerte Kettenumlenkungen 3 und 4 begrenzt, die die Kette auf zwei weitere Kettenumlenkungen 10 und 11 führen. Diese Kettenumlenkungen 10 und 11 sind, wie durch Pfeile angedeutet, horizontal verschiebbar gelagert und durch eine starre Verbindung 12 miteinander gekoppelt. Die erstgenannte, stromabwärts angeordnete, starr gelagerte Kettenumlenkung 3 ist als Antriebsritzel ausgebildet und auf der Abtriebswelle eines Schrittgetriebes 5 gelagert.

Zur Erläuterung der Wirkungsweise dieser Vorrichtung soll vom Antriebsmotor 16 ausgegangen werden. Dieser Antriebsmotor 16 läuft kontinuierlich um und treibt über eine Gelenkwelle 17 das Schneckengetriebe 14 an, dessen kontinuierlich umlaufende Abtriebswelle ein Kettenritzel 13 trägt, das von der Förderkette umschlungen wird. Außerdem treibt der Motor 16 über eine Längswelle 18 das Schrittgetriebe 5 an. Dieses Schrittgetriebe 5 unterbricht während eines Gießvorganges die Wirkverbindung zwischen Längswelle 18 und treibender Kettenumlenkung 3 und blockiert diese, um nach Beendigung des Gießvorganges die Kettenumlenkung 3 mit einer Umfangsgeschwindigkeit anzutreiben, die höher ist als die Umfangsgeschwindigkeit des kontinuierlich angetriebenen Ritzels 13.

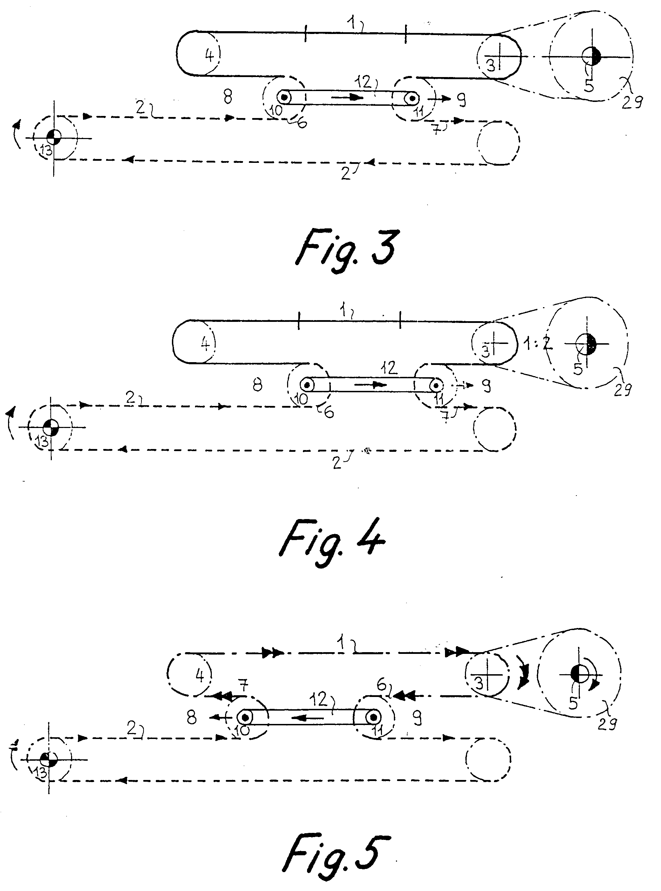

Anhand der Fig. 3,4,5 soll dieser Vorgang weiter verdeutlicht werden. Ausgangspunkt sei die in Fig. 3 dargestellte Situation. Der taktweise laufende Kettenabschnitt 1 ist hier stillgesetzt, indem über das Schrittgetriebe 5 die Verbindung zum Antriebsmotor 16 getrennt und die Kettenumlenkung 3 blockiert wird. Gleichzeitig wird der kontinuierlich laufende Kettenabschnitt 2 weiter über das Ritzel 13 angetrieben. Das hat zur Folge, daß auf der Auslaufseite 9 des Überganges vom taktweise bewegten Kettenabschnitt 1 auf den kontinuierlich bewegten Kettenabschnitt 2, "fehlende" Kette 7 abgezogen, auf der gegenüberliegenden Einlaufseite 8 gleichzeitig "überschüssige" Kette 6 zugeführt wird. Dadurch bewegen sich die starr miteinander verbundenen hin- und herschiebbar gelagerten Ausgleichs-Kettenumlenkungen 10 und 11, wie durch einen Pfeil angedeutet, nach rechts. Sie geben somit die "fehlende" Kette 7 frei und nehmen die "überschüssige" Kette 8 auf. Dieser Vorgang dauert an, bis sich eine Situation etwa gemäß Fig. 4 einstellt. Hier steht der taktweise bewegte Kettenabschnitt zwar noch immer still, doch haben die Kettenumlenkungen 10 und 11 ihre vorderste Stellung eingenommen. Die Einwirkung auf die nicht dargestellte Gießform ist beendet und es gilt nun, diese Gießform abzuführen. Dieser Vorgang ist in Fig. 5 näher dargestellt. Dabei sei vorausgeschickt, daß bei dem gewählten Beispiel von gleich langen Stillstandszeiten und Bewegungszeiten des taktweise bewegten Kettenabschnittes 1 ausgegangen wird. Weiterhin seien der Durchmesser der taktweise angetriebenen Kettenumlenkung 3 und des kontinuierlich angetriebenen Ritzels 13 gleich groß, der Durchmesser des Kettenrades auf der Abtriebswelle des Schrittgetriebes 5 betrage das Doppelte des Durchmessers von Kettenumlenkung 3 bzw. Ritzel 13. Während der Blockade der Kettenumlenkung 3 und damit des Stillstandes des taktweise bewegten Kettenabschnittes 1 habe das kontinuierlich angetriebene Ritzel 13 eine halbe Umdrehung ausgeführt. Nun wird das Schrittgetriebe 5 zugeschaltet. Es führt an Eingangs- und Ausgangswelle während der nächsten halben Umdrehung des Ritzels 13 ebenfalls eine halbe Umdrehung aus. Durch das erwähnte Durchmesser- bzw. Übersetzungsverhältnis von 1:2 führt dabei die Kettenumlenkung 3 eine volle Umdrehung aus. Der zuvor stillstehende Kettenabschnitt 1 bewegt sich deshalb in seiner Bewegungsphase mit einer Geschwindigkeit, deren Mittelwert das Doppelte der Geschwindigkeit des kontinuierlich bewegten Kettenabschnitts 2 beträgt, nach rechts weiter. In der Fig. 5 sind diese Geschwindigkeitsverhältnisse durch Doppel- bzw. Einfachpfeile an der Förderkette angedeutet. Der hierbei entstehende Mehrbedarf an Kette wird auf der Einlaufseite 8 durch Verkürzen der Kettenabschnitte 7 gewonnen. Dadurch wird die Kettenumlenkung 10 in Pfeilrichtung nach links bewegt, wobei sie über die starre Verbindung 12 die Kettenumlenkung 11 mit sich nimmt und dadurch im Auslaufbereich 9 "überschüssige" Kette 6 aufnimmt. Nach Vollendung der halben Umdrehung des Schrittgetriebes 5 haben die Kettenumlenkungen 10 und 11 ihre hinterste Position erreicht, das Schrittgetriebe 5 wird wieder stillgesetzt und blockiert erneut die Kettenumlenkung 3, wodurch der taktweise bewegte Kettenabschnitt 1 wieder zum Stehen kommt, d.h. es beginnt ein neuer Arbeitszyklus.

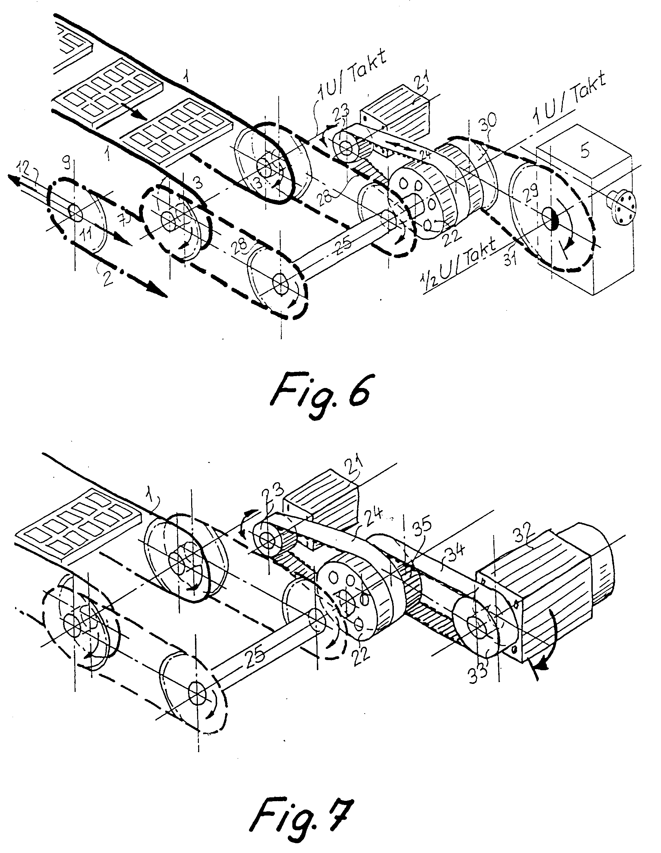

Das geschilderte Ausführungsbeispiel ist insbesondere für Punktguß geeignet, da aus einem stillstehenden Gießkessel punktgenau in eine, während des Gießvorganges ebenfalls stillstehende, Gießform gegossen wird. Häufig wird aber ein sogen. Bandguß verlangt, eine Gießart, bei der während des Gießens eine Relativbewegung zwischen Gießkessel und Gießform erforderlich ist. Zwar wäre es möglich, diese Relativbewegung bei stillstehender Gießform durch eine Bewegung, z.B. Schwenkbewegung des Gießkessels, zu erreichen, doch erlaubt es der erfindungsgemäße Kettentransport, diese Bewegung in vorteilhafter Weise in den Kettentransport zu legen, ohne dabei die Vorteile, die mit dem Erreichen des zeitweiligen Stillstandes durch Blockieren der ziehenden Kettenumlenkung 3 verbunden sind, einzubüßen. Erreicht wird dies in einfacher Weise dadurch, daß der Antriebsbewegung der Kettenumlenkung 3 eine Zusatzbewegung, die die Relativbewegung zwischen Gießkessel und Gießform erzeugt, überlagert wird. In Fig. 6 ist eine mögliche Ausführungsform eines derartigen Kettentransportes dargestellt. Sie unterscheidet sich im Grunde von dem bereits beschriebenen, für Punktguß geeigneten, Ausführungsbeispiel nur dadurch, daß sie um ein Überlagerungsgetriebe, hier als Planetengetriebe 22 dargestellt, und einen Schrittmotor 21 erweitert wurde. Ist der Schrittmotor 21 stillgesetzt, so wirkt das Schrittgetriebe 5 über Abtriebsrad 29 und Kette 31 auf das Antriebsrad 30 des Planetengetriebes 22 und von dort über dessen Abtriebswelle 25 und die Antriebsketten 28 in bereits geschildeter Weise auf die Kettenumlenkung 3 ein, d.h. die Kettenumlenkung 3 wird, je nachdem, ob das Abtriebsrad 29 des Schrittgetriebes 5 steht oder umläuft, entweder blockiert oder mit einer Geschwindigkeit angetrieben, deren Mittelwert der doppelten Geschwindigkeit der kontinuierlich angetriebenen Kettenabschnitte 2 entspricht. Wird der Schrittmotor 21 betätigt, so überträgt sich die Drehbewegung seines Abtriebsrades 23 über den Gurt 24 auf das Gehäuse des Planetengetriebes 22 und überlagert sich dadurch der vom Schrittgetriebe 5 über das Antriebsrad 30 eingebrachten Bewegung. Die Folge hiervon ist, daß die Drehbewegung der Abtriebswelle 25 und damit auch der Kettenumlenkung 3, je nach Drehrichtung des Schrittmotors 21, die Summe oder Differenz der in das Planetengetriebe eingeleiteten Drehbewegungen bildet. Bei Stillstand des Schrittgetriebes 5 ist somit Größe und Richtung der Drehbewegung der Kettenumlenkung 3 und damit die Linearbewegung des taktweise bewegten Kettenabschnitts 1 gleich der vom Schrittmotor 21 eingebrachten Bewegung. Diese Ausführung des erfindungsgemäßen Kettentransportes ist somit sowohl für die Herstellung von Punkt- als auch Bandguß geeignet. Bei Punktgußherstellung bleibt der Schrittmotor 21 einfach abgeschaltet. Allenfalls wird mit seiner Hilfe die Grundeinstellung der Gießstation vorgenommen oder gelegentkorrigiert, so daß, z.B. nach einem Formenwechsel, die Öffnungen der Gießformen exakt unter den Austrittsdüsen des Gießkessels zu stehen kommen.

Bei der Herstellung von Bandguß werden Schrittgetriebe 5 und Schrittmotor 21 benötigt. Diese können gleichzeitig oder im Interesse einer besseren. Überschaubarkeit der Bewegungsvorgänge, auch nacheinander betätigt werden. Bewährt hat sich folgender Bewegungsablauf:

Die zu befüllende Gießform 20 wird bei stillgesetztem Schrittmotor 21 durch die Bewegung des Schrittgetriebes 5 unter den Gießkessel 19 transportiert. Hier wird das Schrittgetriebe 5 ab- und dafür der Schrittmotor 21 eingeschaltet. Gleichzeitig setzt der Gießvorgang ein. Der Schrittmotor 21 bewegt nun die Gießformen 20 alleine voran und zwar um einen Weg, der der Länge des Gießbandes entspricht. Ist dieser Weg zurückgelegt, wird der Gießvorgang abgebrochen und Schrittgetriebe 5 wieder eingeschaltet, wodurch die gefüllte Gießform 19 abgeführt und eine neue, leere Gießform zugeführt wird.
Gleichzeitig wird der Schrittmotor 21 langsam in Gegenrichtung um die Bandgußlänge in seine Ausgangsstellung zurückgedreht.

In Fig. 7 ist eine Ausführungsform dargestellt, in der ein Servomotor 32 das Schrittgetriebe ersetzt. Während bei Anwendung des Schrittgetriebes unter Zugrundelegung gleichlanger Stillstands- und Bewegungszeiten des taktweise bewegten Kettenabschnittes 1 und Antrieb des Schrittgetriebes unmittelbar von der Hauptantriebswelle, ein Übersetzungsverhältnis von 2:1 zwischen Schrittgetriebe und Kettenumlenkung 3 erfordert, kann hier die Motorsteuerung leicht an ein willkürlich gewähltes Übersetzungsverhältnis angepaßt werden. Im gezeigten Ausführungsbeispiel sind gleiche Durchmesser für das Abtriebsrad 33 des Servomotors 32 und für das Antriebsrad 35 des Planetengetriebes 22 gewählt worden. Im übrigen ist die Funktionsweise die gleiche wie im vorangegangenen Ausführungsbeispiel nach Fig. 6, d.h. bei Punktguß erfolgt der Antrieb bzw. das Stillsetzen des taktweise bewegten Kettenabschnittes 1 ausschließlich durch den Servomotor 32, bei Bandguß wird die erforderliche Überlagerungsbewegung durch den Schrittmotor 21 über das Planetengetriebe 22 hinzugefügt.

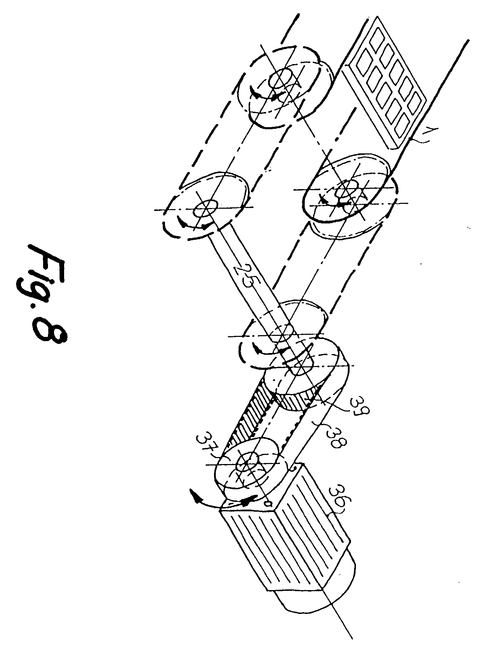

In Fig. 8 schließlich ist eine Ausführungsform dargestellt, die sowohl die Schrittbewegung bei Punkt- und Bandguß als auch die der Schrittbewegung überlagerte Zusatzbewegung für den Bandguß von einem elektronisch gesteuerten Servomotor 36 herleitet. Dieser Servomotor 36 wirkt über sein Abtriebsritzel 37 und den Zahnriemen 38 auf die Riemenscheibe 39 der Welle 25 ein und treibt damit die Kettenumlenkung 3 bzw. den taktweise bewegten Kettenabschnitt 1 an. Stillstand und Nachlaufbewegung des Servomotors 36 werden in nicht dargestellter Weise von einem Taktgeber, der den Takt von der kontinuierlich umlaufenden Hauptantriebswelle 18 (Fig. 2) abnimmt, gesteuert. Die für Bandguß erforderlichen zusätzlichen Bewegungen werden ebenfalls von dem Servomotor 36 aufgebracht, der dazu mit elektronischen Steuermitteln in Verbindung steht.

### Liste der Bezugszeichen

- 1.: taktweise bewegte Förderkette
- 2.: kontinuierlich laufende Förderkette
- 3.: verschiebefeste, angetriebene Kettenumlenkung
- 4.: verschiebefeste Kettenumlenkung
- 5.: Schrittgetriebe für Takttransport
- 6.: bei Stillstand überschüssige Kette
- 7.: bei Stillstand fehlende Kette
- 8.: Einlauf, Übergang kontinuierlich auf taktweise bewegte Kette
- 9.: Auslauf, Übergang kontinuierlich auf taktweise bewegte Kette
- 10.: hin- und hergleitende Kettenumlenkung
- 11.: hin- und hergleitende Kettenumlenkung
- 12.: starre Verbindung der Kettenumlenkungen
- 13.: Antriebsritzel der kontinuierlich bewegten Kette
- 14.: kontinuierlich angetriebenes Schneckengetriebe
- 15.: Kettenspanner
- 16.: Hauptantriebsmotor
- 17.: Gelenkwelle
- 18.: Hauptantriebswelle
- 19.: Arbeits- bzw. Gießstation
- 20.: Gießform
- 21.: Schrittmotor für frei programmierbare Verschiebebewegung bei Bandguß oder zur Justierung der Förderkette
- 22.: Planetengetriebe für überlagerte Zusatzbewegung
- 23.: Abtriebsrad an Schrittmotor
- 24.: Zahnriemen zwischen Schrittmotor und Planetengetriebe
- 25.: Antriebswelle
- 28.: Antriebsketten
- 29.: Abtriebsrad am Schrittgetriebe
- 30.: Antriebsrad am Planetengetriebe
- 31.: Schritt-Antriebskette
- 32.: Servomotor für Schrittbewegung
- 33.: Abtriebsrad am Servomotor
- 34.: Zahnriemen
- 35.: Antriebs-Zahnscheibe am Planetengetriebe
- 36.: Servomotor für Schritt- und Zusatzbewegung
- 37.: Abtriebsrad am Servomotor
- 38.: Zahnriemen
- 39.: Zahnriemenscheibe
- 40.: Gießkopf
- 41.: Gießkopf
- 42.: Gießkopf
- 43.: Abspachtelstation
- 44.: Rüttelbahn
- 45.: Kühleinrichtung

## Patentansprüche

1. Kettentransport mit einer, einen endlosen Kreislauf bildenden Transportkette, insbesondere für Schokoladegießformen, die innerhalb einer Anlage zur Herstellung von Schokoladeartikeln von Arbeitsstation zu Arbeitsstation transportiert werden, wobei zumindest ein Teilabschnitt der Transportkette kontinuierlich läuft, während zumindest ein anderer Teilabschnitt taktweise in seiner Geschwindigkeit verändert wird, dadurch gekennzeichnet, daß jeder taktweise in seiner Geschwindigkeit veränderbare Teilabschnitt (1) der Transportkette durch zwei in Fixpunkten gelagerte Kettenumlenkungen (3 und 4) begrenzt ist, wobei die stromabwärts angeordnete Kettenumlenkung (3) als ziehendes Antriebsritzel ausgebildet ist, das mit zu- und abschaltbaren Antriebsmitteln in Verbindung steht und daß zur Aufnahme bzw. Abgabe von überschüssiger bzw. fehlender Kettenlänge an Ein- und Auslauf (8,9) dieser Teilabschnitte (1) frei hin- und hergleitende Kettenumlenkrollen (10,11) angeordnet sind.

2. Vorrichtung nach Anspruch 1, dadurch gekennzeichnet, daß zwischen den frei hin- und hergleitenden Kettenumlenkrollen (10,11) eine starre Verbindung (12) angeordnet ist.

3. Vorrichtung nach Anspruch 1, dadurch gekennzeichnet, daß die Bewegungsebene der frei hin- und hergleitenden Kettenumlenkrollen (10,11) parallel zum dazugehörigen, taktweise in seiner Geschwindigkeit veränderbaren Kettenabschnitt verläuft.

4. Vorrichtung nach Anspruch 1, dadurch gekennzeichnet, daß als Antriebsmittel für die stromabwärts gelagerte, als Antriebsritzel ausgebildete Kettenumlenkung (3) ein Schrittgetriebe (5) angeordnet ist, das abwechselnd die Kettenumlenkung (3) antreibt oder blockiert.

5. Vorrichtung nach Anspruch 4, dadurch gekennzeichnet, daß zwecks Überlagerung einer Zusatzbewegung zwischen Schrittgetriebe (5) und Kettenumlenkung (3) ein Überlagerungsgetriebe (22) angeordnet ist.

6. Vorrichtung nach Anspruch 1, dadurch gekennzeichnet, das als Antriebsmittel für die stromabwärts gelagerte, als Antriebsritzel ausgebildete Kettenumlenkung (3) ein Servomotor (32) angeordnet ist.

7. Vorrichtung nach Anspruch 6, dadurch gekennzeichnet, daß, zwecks Überlagerung einer Zusatzbewegung, zwischen Servomotor (32) und Kettenumlenkung (3) ein Überlagerungsgetriebe (22) angeordnet ist.

8. Vorrichtung nach Anspruch 5 oder 7, dadurch gekennzeichnet, daß zur Erzeugung der Überlagerungsbewegung ein Schrittmotor (21) mit dem Überlagerungsgetriebe (22) in Wirkverbindung steht.

9. Vorrichtung nach Anspruch 5 oder 7, dadurch gekennzeichnet, daß das Überlagerungsgetriebe (22) als Planetengetriebe ausgebildet ist.

10. Vorrichtung nach einem der Ansprüche 1 bis 3, dadurch gekennzeichnet, daß als Antriebsquelle für den Antrieb der taktweise bewegten Teilabschnitte (1) der Transportkette ein elektronisch gesteuerter Servomotor (36) angeordnet ist, der zugleich die Überlagerungsbewegung erzeugt.

## Claims

1. Chain conveyor with a transport chain forming an endless loop, particularly for chocolate moulds which are transported from workstation to workstation within an installation for manufacturing chocolate articles, at least one section of the transport chain running continuously whilst the speed of at least one other section is varied cyclically, characterised in that each section (1), whose speed is cyclically variable, of the transport chain is bounded by two chain deflectors (3 and 4) mounted at fixed points, the downstream chain deflector (3) being constructed as a pulling drive pinion, which is connected to drive means which may be switched on and off and that chain deflecting rollers (10, 11), which slide freely back and forth, are arranged at the entry and exit (8, 9) of these sections (1) to take up and give up excess and missing chain length, respectively.

2. Apparatus as claimed in Claim 1, characterised in that a rigid connection (12) is arranged between the chain deflecting rollers (10, 11) which slide freely back and forth.

3. Apparatus as claimed in Claim 1, characterised in that the plane of movement of the chain deflecting rollers (10, 11), which slide freely back and forth, extends parallel to the associated chain section whose speed is cyclically variable.

4. Apparatus as claimed in Claim 1, characterised in that a stepper drive (5), which alternately drives or locks the chain deflector (3), is provided as the drive means for the chain deflector (3), which is mounted downstream and is constructed as a drive pinion.

5. Apparatus as claimed in Claim 4, characterised in that a superimposition gear (22) is arranged between the stepper drive (5) and chain deflector (3) for the purpose of superimposing an additional movement.

6. Apparatus as claimed in Claim 1, characterised in that a servomotor (32) is provided as the drive means for the downstream mounted chain deflector (3), which is constructed as a drive pinion.

7. Apparatus as claimed in Claim 6, characterised in that a superimposition gear (22) is arranged between the servomotor (32) and chain deflector (3) for the purpose of superimposing an additional movement.

8. Apparatus as claimed in Claim 5 or 7, characterised in that a stepper motor (21) is operatively connected to the superimposition gear (22) for producing the superimposed movement.

9. Apparatus as claimed in Claim 5 or 7, characterised in that the superimposition gear (22) is constructed as a planetary gear.

10. Apparatus as claimed in one of Claims 1 to 3, characterised in that an electronically controlled servomotor (36) is provided as the drive source for the drive of the cyclically moved sections (1) of the transport chain which at the same time produces the superimposed movement.

## Revendications

1. Transporteur à chaîne avec une chaîne de transport formant un circuit sans fin particulièrement pour les moules à chocolat qui sont transportes de l'une station de travail à l'autre dans une installation pour la fabrication d'articles en chocolat, au moins une section de la chaîne de transport fonctionne en continu tandis qu'au moins une autre section est variable en cadence en sa vitesse, caractérisée en ce que chaque section (1) de la chaîne de transport qui est variable en cadence en sa vitesse est limitée par deux déflecteurs (3,4) montés en point fixe de façon que le déflecteur descendant (3) fonctionne comme un pignon d'entraînement couplé avec des éléments d'entraînement qui sont enclenchables et déclenchables et en ce que les rouleaux de renvoi (10,11) librement glissants sont situés à l'entrée et à la sortie (8,9) de ces sections (1) pour l'allongement ou le raccourcissement de la longueur de chaîne manquante ou excessive.

2. Dispositif selon la revendication 1, caractérisé en ce qu'entre les rouleaux de renvoi glissants dans les deux sens (10,11) une connection rigide (12) est assurée.

3. Dispositif selon revendication 1, caractérisé en ce que le mouvement en avant et en arrière des rouleaux de renvoi de chaîne glissants (10,11) est fait parallèle au secteur de chaîne qui en fait partie et dont la vitesse est variable en cadence.

4. Dispositif selon revendication 1, caractérisé en ce qu'un engrenage pas à pas (5) est installé comme moyen d'entraînement pour le déflecteur de chaîne (3) de la partie descendante qui fonctionne comme pignon d'entraînement, au choix l'engrenage entraîne le déflecteur (3) ou le bloque.

5. Dispositif selon revendication 4, caractérisé en ce que pour le délestage d'un mouvement supplémentaire entre l'engrenage à pas (5) et le déflecteur de chaîne (3) un engrenage de délestage (22) est placé.

6. Dispositif selon revendication 1, caractérisé en ce qu'un servo-moteur (32) est placé comme moyen d'entraînement de la partie descendante de la chaîne, le déflecteur (3) étant utilisé comme pignon d'entraînement.

7. Dispositif selon revendication 6, caractérisé en ce que pour le transfert d'un mouvement supplémentaire entre le servo-moteur (32) et le déflecteur (3) un engrenage de délestage (22) est placé.

8. Dispositif selon revendication 5 ou 7, caractérisé en ce que pour obtenir un mouvement de délestage un moteur pas à pas (21) est en relation avec un engrenage de délestage (22).

9. Dispositif selon revendication 5 ou 7, caractérisé en ce que l'engrenage de délestage (22) est un engrenage planetaire.

10. Dispositif selon une des revendications 1 à 3, caractérisé en ce que pour l'entraînement des sections (1) avec mouvement en cadence de la chaîne de transport un servo-moteur à gestion électronique (36) est placé qui produit également le mouvement de délestage.
